# EUROPEAN PATENT APPLICATION

(11) **EP 4 678 335 A1**
(43) Date of publication of application: **14.01.2026**
(21) Application number: 24188449.3
(22) Date of filing: 12.07.2024
(51) Int. Cl.: B24B 19/16, B23K 11/30

(54) **APPARATUS FOR PROCESSING WELDING ELECTRODES**

(71) Applicant: Inelco A/S, 9690 Fjerritslev (DK)
(72) Inventor: RØDBRO, Søren, 9690 Fjerritslev (DK); VANGSGAARD, Jeppe, 9000 Aalborg (DK)
(74) Representative: Patrade A/S

(57) **Abstract**

The present invention relates to an apparatus for processing tips of welding electrodes in particular Tungsten electrodes. The apparatus can perform up till three operations of sharpening, truncating, or cutting the electrode tip.

## Description

### Field of the Invention

The present invention relates to an apparatus for processing tips of welding electrodes in particular Tungsten electrodes. The apparatus can perform up till three operations of sharpening, truncating, or cutting the electrode tip.

### Background of the Invention

The tungsten electrode used in gas tungsten arc welding (GTAW) is non-consumable. It serves merely as the terminal for the electric arc which produces the heat needed to join the base metal being welded.

Filler metal may sometimes be added to the weld pool, depending on the desired base metal thickness, joint design and weld characteristics.

The shape of the tungsten electrode tip is an important process variable in GTA welding. Tungsten electrode geometry influences the arc shape (thereby affecting the weld bead size and shape), the weld penetration, and point longevity of the electrode. The electrode's geometry is thus a welding variable that should be monitored during weld procedure development. In addition, proper electrode grinding procedures and equipment should be used to ensure that electrodes are dimensionally correct.

Finally, different tungsten materials pose different characteristics in arc start ability, electrode life, and contamination resistance. This makes the selection of the proper material for your application an important variable in welding performance. The proper preparation of your electrodes in each of these areas will provide the benefits of consistent welding with optimum performance.

To produce the high quality orbital fusion welds required of today's high-tech industries, tungsten electrode shape is an important variable that must be kept consistent. Most orbital manufacturers require a precise tungsten length.

Truncating the tip reduces the risk for burning the tip during high power welding.

Regardless of the electrode tip geometry selected, it is important that consistent electrode geometry be used once a welding procedure is established. Changes in electrode geometry can significantly influence the weld bead shape and size; therefore, electrode tip configuration is a welding variable that should be studied during the welding procedure development.

To produce optimum arc stability, diamond grinding of tungsten electrodes should be done with the axis of the electrode perpendicular to the rotation axis of the grinding wheel. The diamond grinding wheel should be reserved for grinding only tungsten to eliminate possible contamination of the tungsten tip with foreign matter during the grinding operation. An exhaust system should be used when grinding Thoriated Tungsten electrodes to remove the grinding dust from the work area, due to the radioactive Thoria.

One of the most overlooked areas of tungsten electrode preparation is the cutting operation or contaminated tip removal. What to do with contaminated tungsten electrodes is the most frequent problem confronting anyone doing GTA welding. A contaminated electrode produces an erratic arc and a dirty, contaminated weld. If the contamination of the electrode is small, however, it usually can be removed by regrinding. If contamination cannot be removed in this manner, the next step is to cut the contaminated portion off the electrode.

There is a need in the art for a grinding apparatus which is simple to operate to obtain the desired and precise geometry of the electrode tip and which enables cutting off contaminated portions of the electrode.

### Object of the Invention

One objective of the present disclosure is to provide an apparatus for processing tips of welding electrodes, in particular Tungsten electrodes, which makes it easier to adjust the grinding angle to obtain a precise electrode tip shape.

It is further an object of the present invention to provide an apparatus for processing welding electrodes which also enable blunt grinding the electrode tip for high effect welding.

It is furthermore an object of the present invention to provide an apparatus for processing welding electrode which further enable cutting the electrode tip for removal of contaminations.

### Description of the Invention

One objective of the invention is achieved by an apparatus for processing tips of welding electrodes, in particular Tungsten electrodes.

The apparatus comprises:
- a grinding disc with a curved grinding surface for sharpening the electrode tip,
- a drive motor for rotating the grinding disc around a first rotational axis,
- a first holder with a first insertion opening adapted for receiving and holding the electrode or an electrode holder.

The first holder is rotatably arranged around a second rotational axis arranged parallel to the first rotational axis.

The first holder is adapted to fix the electrode in a plane of the grinding disc with the tip in contact with the curved grinding surface at a contact point. The contact point is substantially coinciding with the second rotational axis.

The first holder may be in a first position substantially perpendicular to the curved grinding surface, when receiving the electrode or electrode holder, such that the tip of the electrode is substantially perpendicular to the curved grinding surface. The first holder holding the electrode or the electrode holder may then be rotated about the second axis to a second position. The first holder consequently holds the electrode or electrode holder in a position angled relative to the curved grinding surface.

In this position, the curved grinding surface grinds the electrode tip in an angular shape depend on the degree of rotation. The first holder may be positioned in a multitude of different angles to achieve different characteristics of the electrode tip. Thus, the first holder is rotated for forming an angled shape of the tip of the electrode.

The shape of a tungsten electrode tip is an important process variable in GTA welding. Tungsten electrode geometry influences the arc shape (thereby affecting the weld bead size and shape), the weld penetration, and point longevity of the electrode.

To produce the high quality orbital fusion welds required of today's high-tech industries, tungsten electrode shape is an important variable that must be kept consistent. Most orbital manufacturers require a precise tungsten length.

By means of this simple provision of rotating a first holder about a second rotational axis an apparatus for processing tips of welding electrodes is hereby obtained, which makes it easier to adjust the wanted grinding angle of the electrode tip.

In some embodiment the grinding disc may be a diamond grinding wheel. The diamond grinding wheel should be reserved for grinding only tungsten to eliminate possible contamination of the tungsten tip with foreign matter during the grinding operation. A contaminated electrode produces an erratic arc and a dirty, contaminated weld.

2_ln one embodiment of the apparatus, the grinding disc may comprise a plane face perpendicular to the curved grinding surface. The plane face may comprise an annular ring with a plane grinding surface for blunt grinding the electrode tip. The apparatus may comprise a second holder with a second insertion opening adapted for receiving and holding the electrode or the electrode holder and adapted to fix the electrode substantially perpendicular to the plane grinding surface with the tip in contact with the plane grinding surface.

By holding the electrode or electrode holder substantially perpendicular to the plane grinding surface, the plane grinding surface process the tip of the electrode to achieve a blunt tip. Electrodes with blunt tips are especially useful in high power welding, since truncating the tip reduces the risk for burning the tip during high power welding.

One advantage of this embodiment is that it may provide an apparatus for processing tips of welding electrodes with fully integrated means for angle grinding and blunt grinding of the electrode.

One of the most overlooked areas of tungsten electrode preparation is the cutting operation or contaminated tip removal. What to do with contaminated tungsten electrodes is the most frequent problem confronting anyone doing GTA welding. A contaminated electrode produces an erratic arc and a dirty, contaminated weld. If the contamination of the electrode is small, however, it usually can be removed by regrinding. If contamination cannot be removed in this manner, the contaminated portion of the electrode may be cut off.

In one embodiment, the apparatus may comprise a cutting disc with an edge for cutting the electrode. The cutting disc may be arranged parallel to the grinding disc. The cutting disc may be rotated by the drive motor around the first rotational axis. The apparatus may comprise a third holder rotatably arranged around a third rotational axis arranged parallel to the first rotational axis. The third holder may comprise a third insertion opening adapted for receiving and holding the electrode or the electrode holder substantially parallel to the first rotational axis with the electrode tip extending out of the insertion opening and wherein when the rotating the third holder, the electrode will intersect the edge of the cutting disc for cutting off the electrode tip.

Electrodes with contaminated tips may need to be cut off if contaminated to ensure optimal welding conditions. The third holder may be in a first position when rec receiving the electrode or electrode holder, where the electrode does not intersect the edge of the cutting disc. When rotating the third holder about the third axis to a second position, the electrode will intersect the edge of the cutting disc thereby cutting off the tip of the electrode.

After cutting off the tip of the electrode to remove the contaminated portion, the electrode med be inserted into the first holder or det second holder to grind the electrode tip in the desired electrode shape.

This embodiment is advantageous, as it may provide an apparatus for processing tips of welding electrodes with fully integrated means for angle grinding and/or blunt grinding and/or cutting of the electrode.

In one embodiment of the apparatus, the second rotational axis and the third rotational axis may be coinciding.

Thereby, an apparatus with fewer moving parts can be provided.

In one embodiment of the apparatus, the first holder and the third holder may be comprised in a position wheel rotatably arranged around the second rotational axis.

Thereby, an apparatus with fewer moving parts is provided, which is easy to operate. As the first holder and third holder can be rotated about the second and third axis, respectively, by simply rotating the rotating the position wheel about the second axis.

In one embodiment of the apparatus, the position wheel may comprise a position lock configured for releasably locking the position wheel in a position relative to the second rotational axis.

The position lock enable fixing of the first holder and third holder at specific positions relative to the second rotational axis. Thereby, the first holder holding the electrode or electrode holder may fixed at specific grinding angle of the electrode tip to obtain a precise electrode shape. Furthermore, the third holder holding the electrode or electrode holder may fixed at position, where the electrode intersects the cutting disc for easy and stable cutting of the electrode.

In one embodiment of the apparatus, the grinding disc may be positioned in a grinding house preferably built together with said drive motor. The housing may be closed with a preferably transparent wall part, and may be adapted to contain a grinding fluid, preferably water, wherein the grinding disc may be arranged in contact with the grinding fluid.

The grinding house may be a closed housing which effectively collects the grinding dust containing Tungsten, which has a considerable reusable value, thereby overcoming the environmental problems with grinding dust created during processing of the welding electrode. Grinding of Thoriated Tungsten electrodes is, therefore, also possible with the apparatus.

The transparent wall part further makes it possible to watch the fluid level, as water is filled in the grinding house, so that the grinding disc is kept wet during the grinding process, and/or so that the grinding dust is collected in the grinding fluid.

The transparent wall part may be a clear acrylic plate.

In some embodiment the grinding house may further comprise an exhaust system for removing grinding dust. An exhaust system is advantageous when grinding Thoriated Tungsten electrodes to remove the grinding dust from the work area.

In other embodiments the grinding house may be arranged separate from the drive motor and/or the wall part may be non-transparent or partially transparent and/or the grinding fluid may be a fluid other than water.

In one embodiment of the apparatus, the third holder may be comprised in the grinding house and wherein in front of or in the third insertion opening a flexible washer may be arranged, through which the outermost end of the electrode holder extends.

One effect of the washer is to splash-proof the apparatus when the third holder is not used. Hence, in the situation of wet grinding, the rotation of the grinding disc could cause splashing through the third insertion opening.

In one embodiment of the apparatus, the position wheel may be at least splashproof connected with the grinding house as the position wheel comprises a metal banding extending from the position wheel into the housing so that the band rotates with the position wheel.

The metal banding catches the spraying from the rotating grinding disc of which the lowermost part is immerged the grinding fluid and directs the caught grinding fluid back to the bottom of the grinding house for reuse, thereby minimizing the spraying from the rotating grinding disc.

In one embodiment of the apparatus, the position wheel may extend into the griding house through an opening comprising sealing.

Thereby keeping the grinding fluid and dust effectively inside grinding house of the apparatus. The sealing is preferably waterproof, such that the position wheel is waterproof connected to the grinding house.

Furthermore, the sealing is preferably dust proof, such that the grinding dust is maintained within the apparatus, such that grinding of Thoriated Tungsten electrodes is possible with the apparatus.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
- Fig. 1: illustrates the apparatus and a tungsten electrode with a tip;
- Fig. 2: illustrates the apparatus in three perspectives;
- Fig. 3: illustrates a cross section of the apparatus taken along line A-A in figure 2A;
- Fig. 4: illustrates a cross section of the apparatus taken along line B-B in figure 2C, wherein an electrode is inserted into the first holder;
- Fig. 5: illustrates a cross section of the apparatus taken along line C-C in figure 2C, wherein an electrode is inserted into the first holder;
- Fig. 6: illustrates a cross section of the apparatus taken along line D-D in figure 6A, wherein an electrode is inserted into the first holder;
- Fig. 7: illustrates a cross section of the apparatus taken along line E-E in figure 7A, wherein an electrode is inserted into the second holder;
- Fig. 8: illustrates a cross section of the apparatus taken along line F-F in figure 8A, wherein an electrode is inserted into the third holder;
- Fig. 9: illustrates positioning the first holder and/or the third holder.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

| No | Item |
|---|---|
| 1 | Apparatus |
| 2 | Tips |
| 3 | Electrodes |
| 4 | Electrode holder |
| 10 | First holder |
| 11 | First insertion opening |
| 20 | Second holder |
| 21 | Second insertion opening |
| 30 | Third holder |
| 31 | Third insertion opening |
| 40 | Grinding disc |
| 41 | Curved grinding surface |
| 42 | Contact point |
| 43 | Plane grinding surface |
| 50 | Drive motor |
| 60 | Cutting disc |
| 61 | Cutting edge |
| 70 | Position wheel |
| 71 | Position lock |
| 72 | Metal banding |
| 80 | Grinding house |
| 81 | Transparent wall part |
| A1 | First rotational axis |
| A2 | Second rotational axis |
| A3 | Third rotational axis |

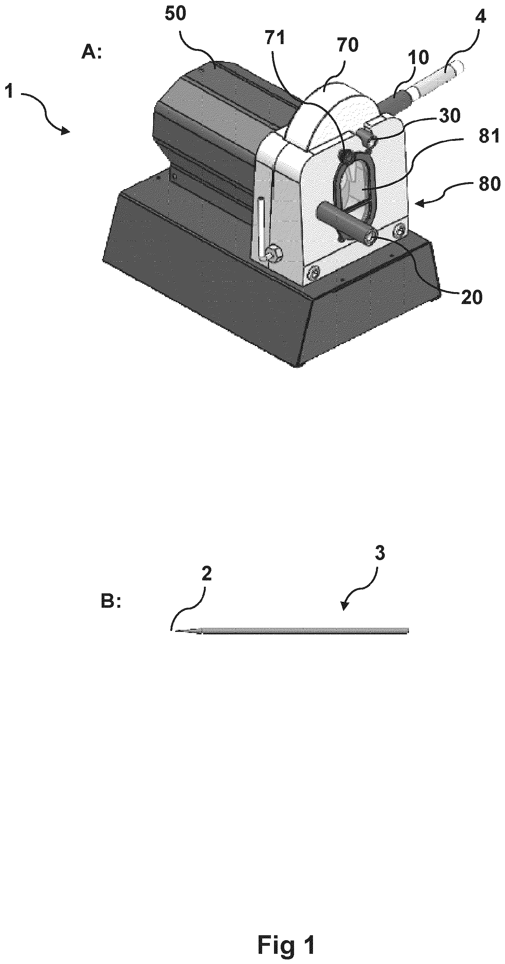

Figures 1-9 illustrate an embodiment of the apparatus 1 for processing tips 2 of welding electrodes, in particular Tungsten electrodes 3.

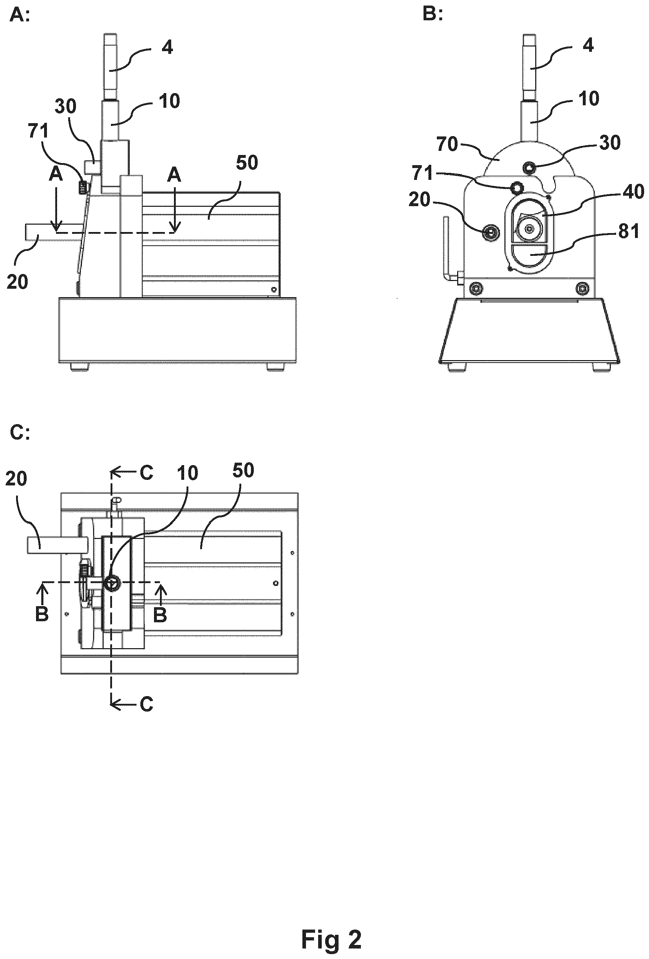

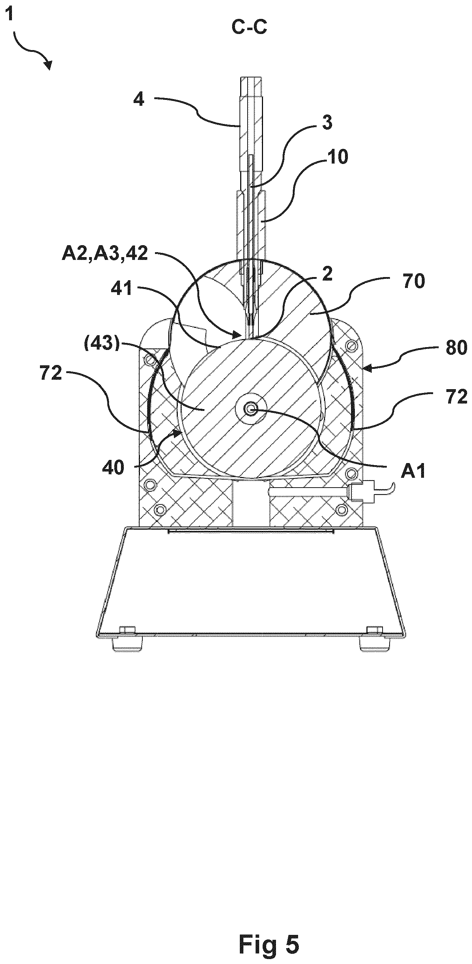

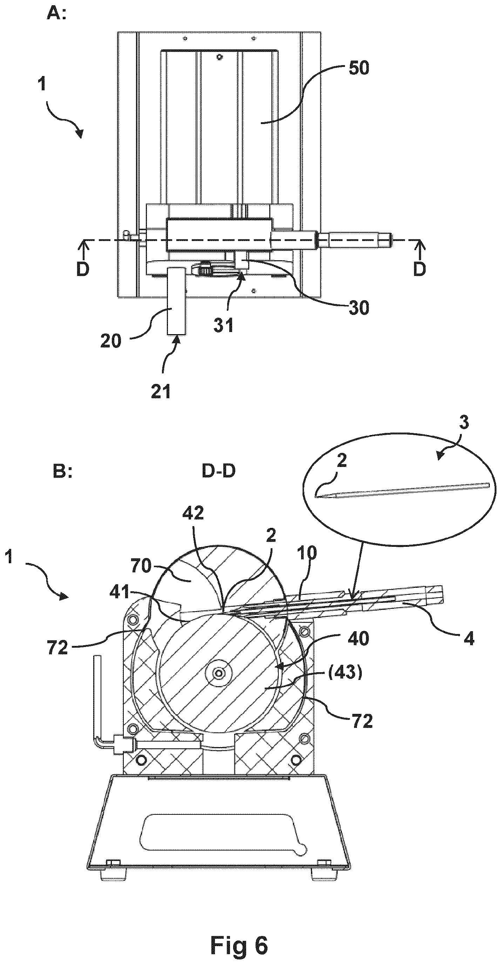

The apparatus 1 comprises a grinding disc 40 with a curved grinding surface 41 for sharpening the electrode tip 2. The curved grinding surface 41 is best illustrated in the cross section in figure 5, taken along lines C-C in figure 2C, and the cross section in figure 6B, taken along lines D-D in figure 6A.

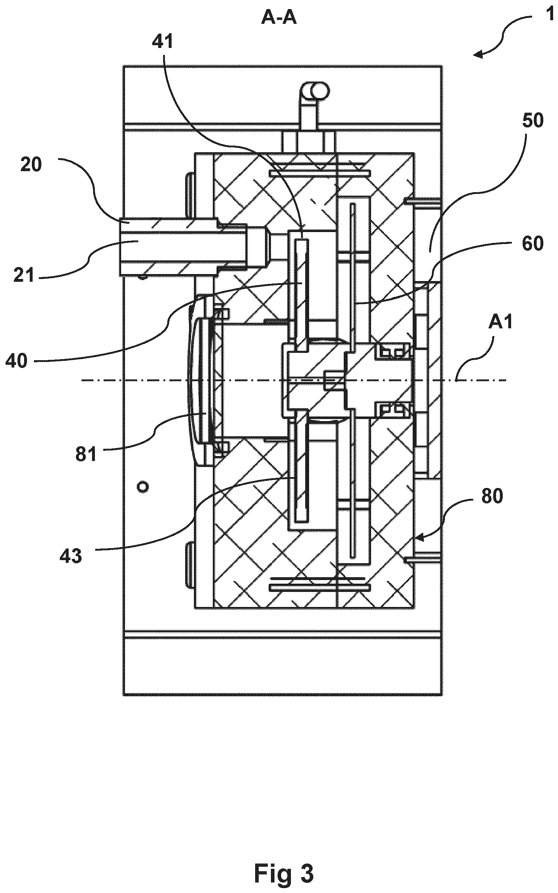

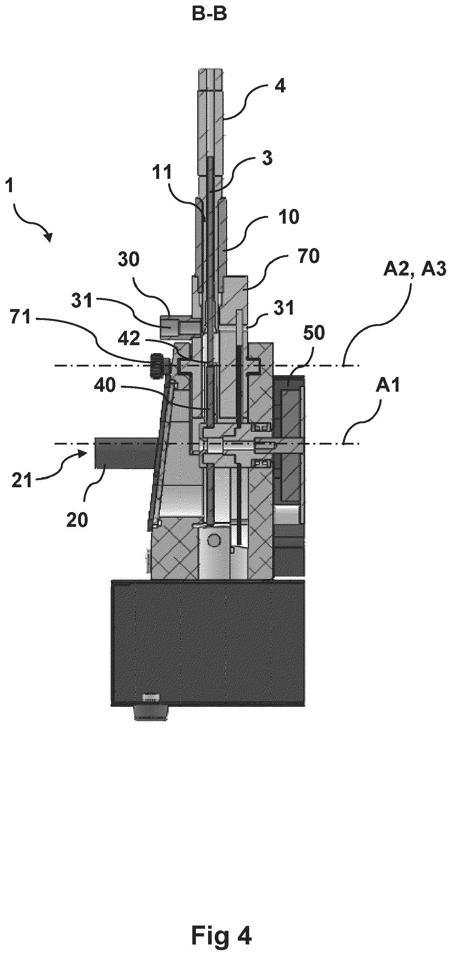

The apparatus 1 comprises a drive motor 50 for rotating the grinding disc 40 around a first rotational axis A1. The first axis A1 is best illustrated in the cross section in figure 3, taken along lines A-A in figure 2A, and the cross section in figure 4, taken along lines B-B in figure 2C.

The apparatus 1 comprises a first holder 10 with a first insertion opening 11 adapted for receiving and holding the electrode 3 or an electrode holder 4.

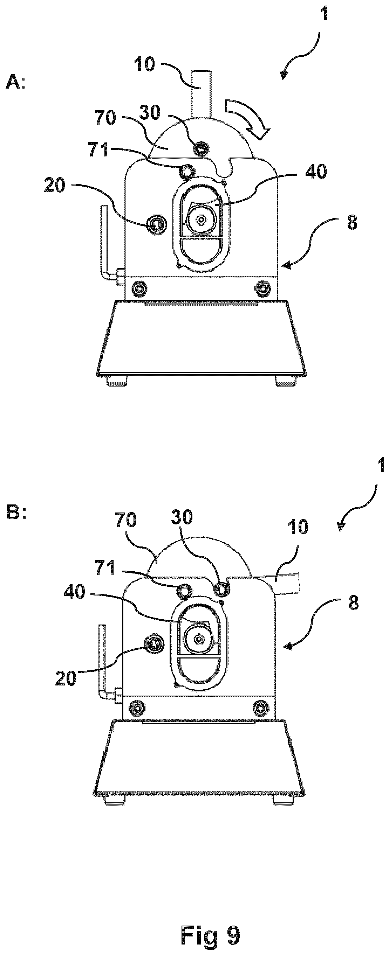

The first holder 10 is rotatably arranged around a second rotational axis A2 arranged parallel to the first rotational axis A1, see figure 4 illustrating both the first axis A1 and the second axis A2, and figures 9A and 9B illustrating the first holder 10 rotated in two different positions.

Figures 4, 5, and 6 clearly shows the first holder 10 holding the electrode holder 4 which further holds the electrode 3. The first holder 10 fixes the electrode 3 in a plane of the grinding disc 40 with the tip 2 in contact with the curved grinding surface 41 at a contact point 42. As illustrated in figure 5, the contact point 42 substantially coincides with the second rotational axis A2.

In figure 5, the first holder 10 holds the electrode 3 in a position substantially perpendicular to the curved grinding surface 41. By holding the electrode 3 perpendicular to the curved grinding surface 41, the tip 2 of the electrode 3 is blunt grinded.

In figure 6B, the first holder 10 is rotated about the second axis and consequently holds the electrode in a position angled relative to the curved grinding surface 41. In this position, the curved grinding surface 41 grinds the tip 2 in an angular shape depending on the rotation. Figure 6B shows grinding in a 5-degree angle, however, the first holder 10 may be positioned in a multitude of different angles to achieve different characteristics.

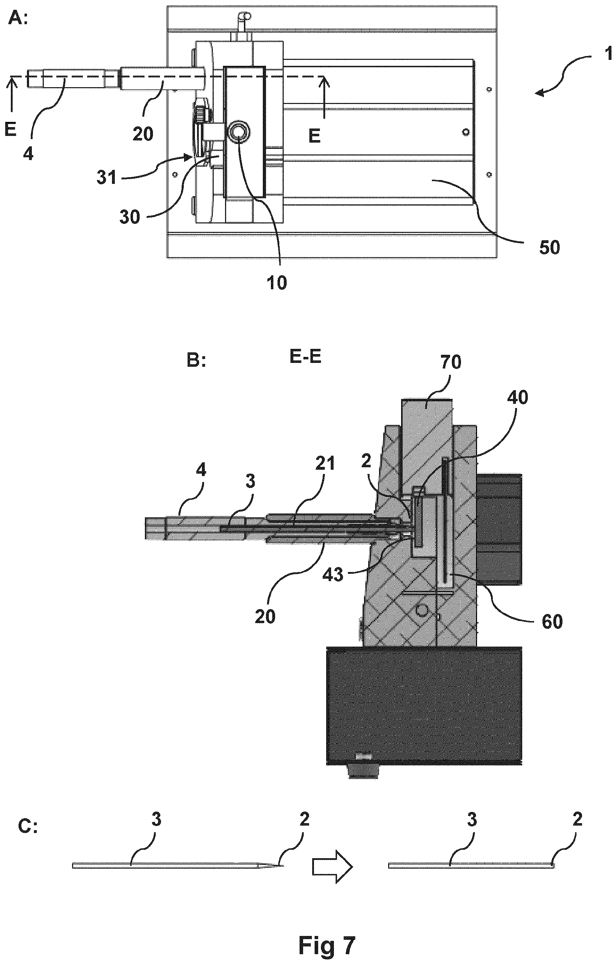

The grinding disc 40 further comprises a plane face perpendicular to the curved grinding surface 41. The plane face comprises an annular ring with a plane grinding surface 43 for blunt grinding the electrode tip 2, which is best seen in figure 3, and which is also visible in figures 5, 6B, and 7B, which is a cross section taken along lines E-E in figure 7A.

The apparatus 1 comprises a second holder 20 with a second insertion opening 21 adapted for receiving and holding the electrode 3 or the electrode holder 4. Figure 7B clearly shows the second holder 20 holding the electrode holder 4 which further holds the electrode 3. The second holder 20 fixes the electrode 3 substantially perpendicular to the plane grinding surface 43 with the tip 2 in contact with the plane grinding surface 43. In this position, the plane grinding surface 43 process the tip 2 of the electrode to achieve a blunt tip 2 as illustrated in figure 7C, wherein the first electrode 3, in the direction of the arrow, has a sharp tip 2 and the second electrode 3 has a blunt tip 2 after grinding. Electrodes 3 with blunt tips 2 are especially useful in high effect welding.

The apparatus 1 further comprises a cutting disc 60 with an edge 61 for cutting the electrode 3. The cutting disc 60 is arranged parallel to the grinding disc 40 and is rotated, by the drive motor 50, around the first rotational axis A1.

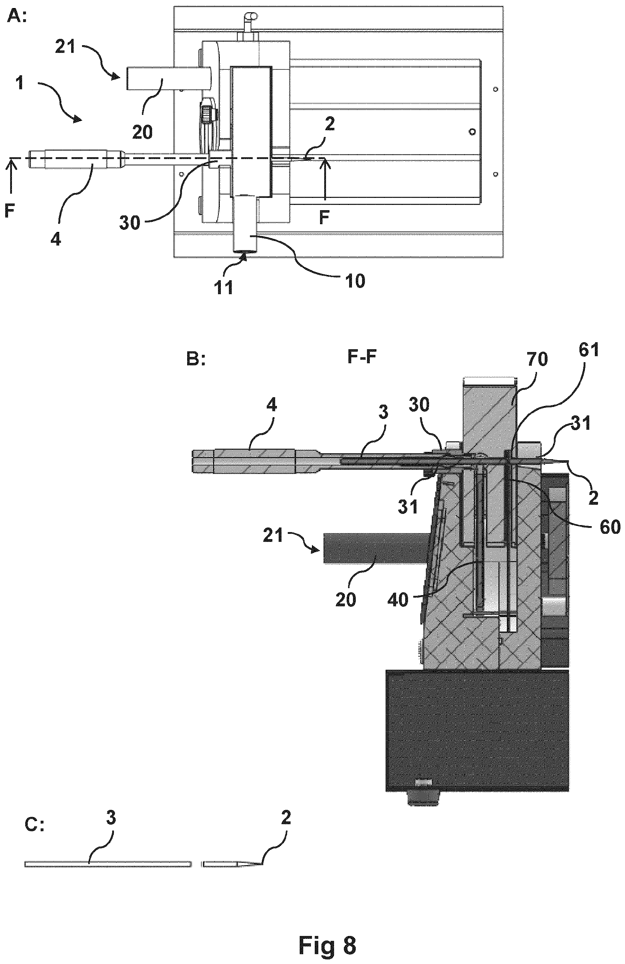

The apparatus comprises a third holder 30 rotatably arranged around a third rotational axis A3, arranged parallel to the first rotational axis A1. The third holder 30 comprises a third insertion opening 31 adapted for receiving and holding the electrode 3 or the electrode holder 4. Figure 8B, which is a cross section taken along lines F-F in figure 8A, clearly shows the third holder 30 holding the electrode holder 4, which further holds the electrode 3. The electrode holder 4 is held substantially parallel to the first rotational axis A1, with the electrode tip 2 extending out of the third insertion opening 31.

Electrodes 3 with contaminated tips 2 may need to be cut off if contaminated to ensure optimal welding conditions. When rotating the third holder 30, the electrode 3 will intersect the edge 61 of the cutting disc 60 thereby cutting off the tip 2 of the electrode 3, as illustrated in figure 8C. Figure 9A illustrates a position of the third holder 30 where the electrode 3 does not intersect the edge 61 of the cutting disc 60. Figure 9B illustrates the position of the third holder 30 as in figure 8A and 8B, where the electrode 3 intersect the edge 61 of the cutting disc 60.

In the illustrated embodiments of the apparatus 1, the second rotational axis A2 and the third rotational axis A3 are coinciding.

The apparatus 1 further comprises a position wheel 70 rotatably arranged around the second rotational axis A2. In the illustrated embodiments, the first holder 10 and the third holder 30 are comprised in the position wheel 70.

The position wheel 70 further comprises a position lock 71. The position lock 71 is configured for releasably locking the position wheel 70 in a position relative to the second rotational axis A2. An example of the position wheel 70 in two different positions are best illustrated in figures 5, 6B, 9A, and 9B.

In the illustrated embodiments, the grinding disc 40 is positioned in a grinding house 80 built together with the drive motor 50. However, in other embodiment (not illustrated) the grinding house 80 may be arranged separate from the drive motor 50. The grinding house 80 is closed with a transparent wall part 81 and is adapted to contain a grinding fluid, preferably water. The grinding disc 40 is arranged in contact with the grinding fluid. In other embodiments (not illustrated) the wall part 81 may be non-transparent or partially transparent, and/or the grinding fluid may be a fluid other than water.

In the illustrated embodiments, the third holder 30 is comprised in the grinding house 80. A flexible washer is arranged in front of or in the third insertion opening 31. The outermost end of the electrode holder 4 extends through the flexible washer.

The position wheel 70 further comprises a metal banding 71 extending from the position wheel 70 into the housing 80 so that the band 71 rotates with the position wheel 70. This makes the position wheel 70 at least splashproof connected with the grinding house 80. The band is best seen in figures 5 and 6B, where the placement of the reference number indicates the end points of the metal band 72.

In the illustrated embodiments, the position wheel 70 extends into the griding house 80 through an opening comprising sealing.

## Claims

1. An apparatus (1) for processing tips (2) of welding electrodes in particular Tungsten electrodes (3), wherein said apparatus comprises:
- a grinding disc (40) with a curved grinding surface (41) for sharpening the electrode tip (2),
- a drive motor (50) for rotating the grinding disc (40) around a first rotational axis (A1),
- a first holder (10) with a first insertion opening (11) adapted for receiving and holding the electrode (3) or an electrode holder (4), said first holder (10) being rotatably arranged around a second rotational axis (A2) arranged parallel to the first rotational axis (A1) and where said first holder (10) is adapted to fix the electrode (3) in a plane of the grinding disc (40) with the tip (2) in contact with the curved grinding surface (41) at a contact point (42), said contact point (42) being substantially coinciding with the second rotational axis (A2).

2. The apparatus (1) according to claim 1, wherein the grinding disc (40) comprises a plane face perpendicular to the curved grinding surface (41), said plane face comprising an annular ring with a plane grinding surface (43) for blunt grinding the electrode tip (2) and wherein the apparatus (1) comprises a second holder (20) with a second insertion opening (21) adapted for receiving and holding the electrode (3) or the electrode holder (4) and adapted to fix the electrode (3) substantially perpendicular to the plane grinding surface (43) with the tip (2) in contact with the plane grinding surface (43)

3. The apparatus (1) according to claim 1 or 2, comprising a cutting disc (60) with an edge (61) for cutting the electrode (3), said cutting disc (60) being arranged parallel to the grinding disc (40), said cutting disc (60) being rotated by the drive motor (50) around the first rotational axis (A1), said apparatus comprising a third holder (30) rotatably arranged around a third rotational axis (A3) arranged parallel to the first rotational axis (A1), where said third holder (30) comprises a third insertion opening (31) adapted for receiving and holding the electrode (3) or the electrode holder (4) substantially parallel to the first rotational axis (A1) with the electrode tip (2) extending out of the insertion opening (31) and wherein when the rotating the third holder (30), the electrode (3) will intersect the edge (61) of the cutting disc (60) for cutting off the electrode tip (2).

4. The apparatus (1) according to any one or more of the preceding claims wherein the second rotational axis (A2) and the third rotational axis (A3) are coinciding.

5. The apparatus (1) according to any one or more of the preceding claims, wherein the first holder (10) and the third holder (30) are comprised in a position wheel (70) rotatably arranged around the second rotational axis (A2).

6. The apparatus (1) according to claim 5, wherein the position wheel (70) comprises a position lock (71) configured for releasably locking the position wheel (70) in a position relative to the second rotational axis (A2).

7. The apparatus (1) according to any one or more of the preceding claims, wherein the grinding disc (40) is positioned in a grinding house (80) preferably built together with said drive motor (50), said housing (80) being closed with a preferably transparent wall part (81), and being adapted to contain a grinding fluid, preferably water, wherein the grinding disc (40) is arranged in contact with the grinding fluid.

8. The apparatus (1) according to claim 7, wherein said third holder (30) is comprised in the grinding house (80) and wherein in front of or in the third insertion opening (31) a flexible washer is arranged, through which the outermost end of the electrode holder (4) extends.

9. The apparatus (1) according to any one of claims 7 or 8, wherein the position wheel (70) is at least splashproof connected with the grinding house (80) as the position wheel (70) comprises a metal banding (72) extending from the position wheel (70) into the housing (80) so that the band (72) rotates with the position wheel (70).

10. The apparatus (1) according to any one of claims 6-9, wherein the position wheel (70) extends into the griding house (80) through an opening comprising a sealing.
